# EUROPEAN PATENT SPECIFICATION

(11) **EP 1 745 233 B1**
(45) Date of publication and mention of the grant of the patent: **09.04.2014**
(21) Application number: 05744644.5
(22) Date of filing: 03.05.2005
(51) Int. Cl.: F16L 15/00, F16L 13/16, E21B 17/042, E21B 43/10, F16J 15/08

(54) **METAL SLEEVE SEAL FOR THREADED CONNECTIONS**
METALLHÜLSENDICHTUNG FÜR GEWINDEVERBINDUNGEN
RACCORD À MANCHON MÉTALLIQUE POUR ACCOUPLEMENTS FILETÉS

(30) Priority: 07.05.2004 US 840996
(43) Date of publication of application: 24.01.2007
(73) Proprietor: VAM USA, LLC, Houston, TX 77060 (US)
(72) Inventor: DELANGE, Richard, W., Kingwood, TX 77345 (US)
(74) Representative: Müller Schupfner & Partner
(86) International application number: PCT/US2005/015146
(87) International publication number: WO 2005/114029

(56) References cited:
- EP-A1- 0 192 015
- EP-A1- 0 672 817
- EP-A1- 1 403 573
- DE-C1- 3 703 052
- JP-A- 57 186 664
- US-A- 2 380 690
- US-A- 4 009 893
- US-A- 4 591 195
- US-A- 4 696 498
- US-A- 4 705 307
- US-A- 4 893 844

## Description

### FIELD OF THE INVENTION

The present invention relates generally to threaded connections used to seal and secure together cylindrical members. More specifically, the present invention relates to threaded tubular members having sleeve seals for enhancing the pressure sealing ability of an engaged threaded pipe connection.

### BACKGROUND SETTING OF THE PRIOR ART

Threaded pipe connections used in the construction of hydrocarbon producing wells are being increasingly called upon to maintain pressure seals against very high-pressure differentials. The high-pressure side of the seal may be on the internal side of the connection or may be on the external side of the connection, or may alternate between the internal and external sides of the connection. The problem of withstanding these high internal and external pressure differentials is compounded when the requirements of a particular well construction call for a relatively thin-walled connection.

The external dimensions of many threaded connections are maintained small by employing a "flush joint" design, which ensures that the outside diameter of the connection at the end of a tube body is the same as, or is not significantly greater than, the outside diameter of the tube body itself. Maintaining the largest flow diameter through a flush joint connection also requires that the radial thickness of the connection be substantially the same as the radial thickness of the tube body. This results in a thin wall connection.

In many flush joint connections, the smallest radial diameters of the components making up the connection occur near the nose of the pin and near the face of the box. Sealing that occurs in the areas of the smallest radial cross sectional dimensions imposes radial forces against the component member with the small wall thickness that can cause permanent deformation of the component. Such connections, when deformed after being exposed to a high-pressure differential, are rendered ineffective in subsequently sealing against smaller pressure differentials. This situation may occur, for example, when a connection in a string of pipe is deformed during testing to a pressure above the anticipated working pressure of the string. Abnormal pressure differentials can also deform, or otherwise render inoperative, resilient seals that are positioned within the connection.

The problems associated with connections being subjected to high pressures have become more severe with the introduction of the new testing formats introduced by the International Organization for Standardization (ISO) and the American Petroleum Institute (API). The new ISO testing format (ISO 13679), requires performance verification testing of connections for downhole applications. These tests are very rigorous and more severe than the API RP5C5 formats that ISO 13679 replaced. One of the more severe parts of the ISO format is reverse pressure testing of the connection that requires repeated alternating of the applied highest test pressure from internal to external.

When internal or external pressure is applied that is equal to the pipe body capabilities, as may be required by some test procedures, the seal area on the thinnest component of the connection can be permanently deformed causing its sealing ability to be lost when the pressure is reversed. In these situations, a relatively higher internal test pressure can yield the external seal element on the box near the outside end of the connection and the external pressure can produce the same damage on the internal seal element on the pin near the inside end of the connection.

A solution that has been employed in the past to avoid the distortion of thin seal areas in thin wall connections has been to provide a metal sealing engagement near the center of the connection, between two threaded steps. Often, such metal-to-metal seals at the center, of the connection are slightly tapered so that they can be firmly engaged radially during the makeup process without undergoing significant rotating contact against each other. The rotating contact that occurs between such metal-to-metal seals is a primary cause of galling of the seal surfaces, which can cause the seals to leak. Tapered seals, however, are sensitive to applied tension loads that tend to pull the seals apart, causing the contact pressure between the metal-to-metal seals to be reduced, which in turn reduces the sealing ability of the connection.

The prior art has also taught the use of metal seal rings that are disposed within grooves formed in the threaded area of the connection. Such seal rings are designed to be cut by the threads of the pin or box component to which they are being engaged. The seal created by such connections is not capable of withstanding the high-pressure differentials required of modern-day connections. In this regard see DE 3703052 C1.

Another solution proposed for handling extremes of pressure and/or temperature is the use of resilient (non-metal) materials to form an annular seal ring in the steel connection. Resilient seal rings, which are often made of polytetrachloroethylene (PTFE) or fiberglass, however, have thermal expansion characteristics that are drastically different from those of steel. As a result, when subjected to downhole temperatures common to deep gas wells or geothermal wells, the resilient ring expands significantly more than the steel. This difference in expansion can push apart the metal seal components in the region directly adjacent to the seal ring. When this occurs, the resilient seal ring can reduce the effectiveness of the metal seal. Examples of such resilient seal rings can be found in U.S. Patents 4,893,844 A and 4,591,195."

### SUMMARY OF THE INVENTION

The present invention permits a connection to be tested under ISO 13679 without leaking, even after exposure to high pressure and/or high temperature differentials, or high amounts of tension or compression. A sleeve seal, which forms a third part of the connection, acts with the pin and box to form a seal that resists deformation during high pressure or high temperature exposure, minimizes galling during makeup and prevents pressure sealing reduction during tension loading.

The material of the sleeve seal is preferably a corrosion resistant metal having thermal characteristics that work with the thermal characteristics of the pin and box material to minimize bearing pressure reduction between engaged surfaces resulting from thermal changes.

A preferred form of the sleeve seal is constructed of a material with characteristics that render the sleeve seal more flexible than the material of the pin and box. By way of example, the steel frequently used in the pin and box construction of conventional oil field tubulars has a Modulus of Elasticity of approximately 30,000,000. When the present invention employs a sleeve seal constructed of titanium, which has a Modulus of Elasticity of approximately 15,000,000, the change in shape of the titanium sleeve may be twice as great as that of the pin and box, permitting an increase in the allowed pressure deformation of the connection as compared with that of a connection using a sleeve seal constructed of the same material as that of the pin and box.

The sleeve seal of the present invention, in addition to having a lower Modulus of Elasticity than that of the pin and/or box of the connection, may also be configured in a specific form to best accommodate the specifics of a particular application. Thus, it may be desirable to locate the seal sleeve at an axial position between the engaged pin and box connections at which the cross sectional radial dimension of the box is less than that of the pin in situations where the external pressure is expected to be abnormally high relative to the internal pressure. The cross sectional radial dimension of the pin at the sleeve seal may be less than that of the box at the axial position of the sleeve seal when the reverse pressure is anticipated. In either situation, the seal may be positioned at a point within the connection that will minimize the possibility of permanent yielding of either component of the connection as a result of exposure to unusually high-pressure differentials.

While the preferred form of the invention is intended for use in a relatively thin wall connection design, in which the connection wall is substantially the same thickness as the tube wall, it will be appreciated that the invention has applicability to any connection design including those in which the external or internal connection dimensions differ from the tube dimensions.

In view of the foregoing, it will be appreciated that a primary object of the present invention is to provide a seal for a threaded connection that can be exposed to extremes of temperature and pressure without losing the ability to maintain a seal at higher or lower temperatures and/or pressures.

Another object of the present invention is to provide a seal for a threaded connection that can be exposed to extremes of both internal or external pressure differentials while maintaining its ability to seal against smaller pressure differentials.

Yet another object of the present invention is to provide a seal for a threaded connection that maintains its ability to seal against pressure differentials acting across the connection as the connection is being exposed to extreme temperature variations.

A related object of the present invention is to provide a seal for a threaded connection in which a seal is maintained against internal or external pressures acting on the connection during, and following, the application to the seal of repeated variations between extremes of high internal pressure and high external pressure.

An important object of the present invention is to provide a high pressure and high temperature resistive seal that remains effective in a connection of the type having external and internal dimensions that are substantially the same as the internal and external dimensions of the tubes secured together by the connection.

An object of the present invention is to provide a sleeve seal insert near the center of a two-step connection such that engaged threads in the pin and box of the connection will be present on either axial side of the seal insert to assist in providing more contact pressure between the sleeve seal and the engaged box and pin members.

The foregoing features, advantages and objects of the present invention, as well as others will be more fully understood and better appreciated by reference to the following drawings, specification and claims.

### BRIEF DESCRIPTION OF THE DRAWINGS

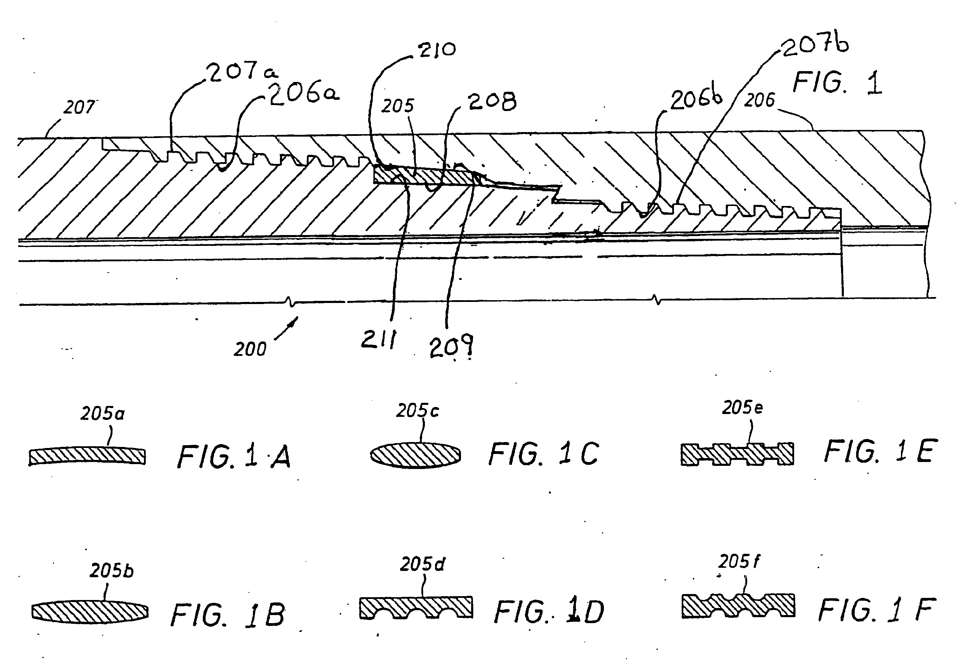

Figure 1 is a quarter sectional view of a connector, of the present invention having an annular sleeve seal disposed between a pin and box of a threaded connection; and
Figures 1A-1F are alternative cross-sectional designs for an annular sleeve seal of the present invention that may be used in a connection between a threaded pin and box.

### DESCRIPTION OF THE ILLUSTRATED EMBODIMENTS

Figure 1 illustrates a thin wall form of the connector of the present invention indicated generally at 200. A metal sleeve seal element 205 is positioned axially between two-step threads forming a threadedly engaged connection comprising a box 206 and pin 207. The two-step threads of the box 206 are formed by the box threads 206a and 206b. The two-step threads of the pin 207 are formed by the pin threads 207a and 207b. Shouldering engagement at the full makeup position is illustrated as occurring at the base of the box 206 and at the nose of the pin 207 as well as along a central shoulder located between the two-step threads. Any, or all, of these points of shouldering engagement may be configured to provide no contact, or very minimal contact, or they may be configured to provide significant contact in which they may act as a major torque shoulder and/or seal.

The radially internal and radially external surfaces of the sleeve seal 205 are formed from radially spaced, parallel, frustoconical surfaces 208 and 209 defining an annular body with inside and outside diameters, respectively, that taper along the central axis of the sleeve seal. The diameters of the sleeve 205 decrease in size in a direction from the base of the pin to the tip of the pin.

An annular, tapering box sleeve area 210 is formed internally within the box 206 between the step threads 206a and 206b. The box threads are thus seen to extend axially away from the box sleeve area 210 on either axial side of the pin sleeve area. A second annular, tapering pin sleeve area 211 is formed externally around the pin 207 between the pin step threads 207a and 207b. The pin threads are also seen to extend axially away from the pin sleeve area 211.

The annular sleeve seal 205 is concentrically disposed radially between the pin sleeve area 211 and the box sleeve area 210 at a location where the sleeve seal is adapted to be compressed radially between the pin sleeve area and the box sleeve area when the connection is threadedly engaged at a full makeup position. As illustrated in Figure 1, the axial ends of the sleeve areas enclosing the sleeve seal 205 may also be configured to provide axial compression of the sleeve seal 205 when the connection is made up to the full makeup position.

According to the invention, the pin sleeve area and the box sleeve area are devoid of the threads that are used to hold the connection together against axial displacement. In its radially compressed condition, the annular sleeve seal 205 forms a sealing engagement between the unthreaded surrounding pin sleeve area and box sleeve area to provide a seal against high pressure differentials acting on either side of the sleeve that attempt to radially separate the engaged pin and box. Selection of a sleeve material with a lower Modulus of Elasticity than that of the material of the surrounding pin and box components ensures that the seal will be maintained against smaller pressure differentials even after the connection is exposed to high pressure differentials acting either externally or internally of the connector.

In operation, the long, thin, tapered metal sleeve 205 is positioned over the pin 207 before the pin is inserted into the box 206. The dimensions of the surfaces 210 and 211 contacting the sleeve 205 are preferably selected such that, at the full makeup position of the pin and box, the sleeve 205 is compressed radially, and/or axially, sufficiently between the surfaces to form a pressure seal with the pin and box components of the connection. During connection makeup, the sleeve seal 205 is preferably compressed sufficiently to create a pressure seal that is effective in sealing a pressure differential that is higher from either, the external or internal directions.

It may be appreciated by reference to Figure 1 that the sleeve seal 205 is disposed between the pin and box connections at a point where the cross sectional dimensions of the pin and box are substantially greater than those of the cross sections of the pin and box members adjacent their respective axial ends. The relative radial wall thickness of the pin or box connection at the point of the placement of the sleeve 205 may be determined as a function of the size and direction of the pressure differential to be sealed by the sleeve seal 205.

The sleeve seal 205 is constructed from a metal with a Modulus of Elasticity that is substantially lower than that of carbon steel, such as titanium or copper-beryllium. A preferred form of the sleeve seal 205 is as illustrated in Figure 1 with smooth, internal and external circumferential surfaces 211, 210 engaging sealing surfaces on both the underlying pin and surrounding box, respectively. Non-smooth surface configurations for the sealing surface areas 210 and 211 may also be employed as required to achieve specific objectives in the connection design.
Figure 1A illustrates a modified cross-section design 205a for the seal 205 having substantially similar end diameters and an arcing section increasing in diameter toward the center of the seal between the two ends.
Figure 1B illustrates a modified cross-section design 205b for the seal 205 having a lens-shaped configuration.
Figure 1C illustrates a modified cross-section design 205c for the seal 205 having an elongate, oval cross-section.
Figure 1D illustrates a modified cross-section design 205d for the seal 205 having a smooth external circumferential surface and an internal surface provided with semicircular annular grooves.
Figure 1E illustrates a modified cross-section design 205e for the seal 205 in which both the internal and external circumferential surfaces of the seal are provided with annular, flat bottom grooves.
Figure 1F illustrates a modified cross-section design 205f for the seal 205 in which curved annular grooves are provided on the internal and external circumferential surfaces of the seal with the grooves of the internal and external surfaces being offset axially relative to each other.

While illustrative and explanatory descriptions of the present invention have been made herein, it will be appreciated that various changes in the details of the construction and use of the illustrated and described embodiments may be made without departing from the scope of the invention, which is defined in the following claims.

## Claims

1. A threaded connection, comprising:
a pin member (207) having external threads (207a and 207b) formed along an external surface of said pin member (207),
a box member (206) having internal threads (206a and 206b) formed along an internal surface of said box member (206), said pin and box members (207, 206) adapted to be threadedly engaged together with said pin and box threads (207a and 207b, 206a and 206b) to a full makeup position to form a threaded connection,
an annular pin sleeve area (211) disposed axially intermediate the axial ends of said pin threads (207a and 207b) whereby said pin threads (207a and 207b) extend axially away from said pin sleeve area (211) on either axial side of said pin sleeve area, said pin threads (207a and 207b) comprise step threads having different diameters on either axial side of said pin sleeve area (211), said pin sleeve area (211) including an area devoid of threads,
an annular box sleeve area (210) disposed axially intermediate the axial ends of said box threads (206a and 206b) whereby said box threads (207a and 207b) extend axially away from said box sleeve area (210) on either axial side of said box sleeve area (210), said pin sleeve area (211) and said box sleeve area (210) being substantially concentrically disposed and at least partially axially coincident when said connection is threadedly engaged at said full makeup position wherein said pin and box threads (207a and 207b, 206a and 206b) on each axial side of said box and pin sleeve areas (210, 211) are engaged,
an annular sleeve seal (205) for concentric disposition radially between said pin sleeve area (211) and said box sleeve area (210), said annular sleeve seal (205) is at a location where the sleeve seal is adapted to be compressed radially between said pin sleeve area (211) and said box sleeve area (210) when said connection is threadedly engaged at said full makeup position, **characterized in that**
said sleeve seal (205) is a metal sleeve seal constructed of a metal having a lower Modulus of Elasticity than that of the material forming the pin member (207) or the box member (206) whereby the sleeve seal (205) forms a pressure sealing engagement between the pin member (207) and the box member (206) while exposed to high pressure differentials acting across said sleeve seal.

2. A threaded connection as defined in Claim 1 wherein said sleeve seal (205) is carried by said pin member (207) before said connection is engaged at said full makeup position.

3. A threaded connection as defined in Claim 1 wherein said sleeve seal (205) has at least one frustoconical surface (208, 209) on its inner and/or outer circumferential surfaces.

4. A threaded connection as defined in Claim 1 wherein said sleeve seal (205) is compressed axially when said connection is threadedly engaged at said full makeup position.

5. A threaded connection as defined in Claim 1 wherein said pin and box sleeve areas (211, 210) are disposed axially at, or in the near vicinity of, the largest cross sectional area formed by the pin and box members (207, 206) when said connection is threadedly engaged at said full makeup position.

6. A threaded connection as defined in Claim 1 wherein said pin threads (207a and 207b) include a shoulder disposed axially between said step threads.

7. A threaded connection as defined in Claim 1 wherein said sleeve seal (205a) has two substantially similar end diameters and an arcing section increasing in diameter toward a center of said sleeve seal between said two end diameters.

8. A threaded connection as defined in Claim 1 wherein said sleeve seal (205b) has a lens-shaped cross sectional configuration.

9. A threaded connection as defined in Claim 1 wherein said sleeve seal (205c) has an elongate, oval cross-section.

10. A threaded connection as defined in Claim 1 wherein said sleeve seal (205d) has a smooth external circumferential surface and an internal surface provided with semicircular annular grooves.

11. A threaded connection as defined in Claim 1 wherein said sleeve seal (205e) has internal and external circumferential surfaces and wherein said both the internal and external circumferential surfaces are provided with annular, flat bottom grooves.

12. A threaded connection as defined in Claim 1 wherein said sleeve seal (205f) has internal and external circumferential surfaces provided with annular grooves that are offset axially relative to each other.

## Patentansprüche

1. Gewindeverbindung, umfassend:
ein Zapfenelement (207), das Außengewinde (207a und 207b) aufweist, die entlang einer Außenfläche des Zapfenelements (207) gebildet sind,
ein Muffenelement (206) das Innengewinde (206a und 206b) aufweist, die entlang einer Innenfläche des Muffenelements (206) gebildet sind, wobei das Zapfen- und das Muffenelement (207, 206) dazu geeignet sind, durch die Gewinde (207a und 207b, 206a und 206b) des Zapfens und der Muffe bis zu einer vollständigen Aufbauposition in einen Schraubeingriff gebracht zu werden, um eine Gewindeverbindung zu bilden,
einen ringförmigen Zapfenmanschettenbereich (211), der in der Achsenrichtung zwischen den axialen Enden der Zapfengewinde (207a und 207b) angeordnet ist, wobei sich die Zapfengewinde (207a und 207b) an beiden axialen Seiten des Zapfenmanschettenbereichs in der Achsenrichtung von dem Zapfenmanschettenbereich (211) weg erstrecken, wobei die Zapfengewinde (207a und 207b) an beiden axialen Seiten des Zapfenmanschettenbereichs (211) Stufengewinde mit unterschiedlichen Durchmessern aufweisen, wobei der Zapfenmanschettenbereich (211) einen Bereich ohne Gewinde umfasst,
einen ringförmigen Muffenmanschettenbereich (210), der in der Achsenrichtung zwischen den axialen Enden der Muffengewinde (206a und 206b) angeordnet ist, wobei sich die Muffengewinde (207a und 207b) an beiden axialen Seiten des Muffenmanschettenbereichs (210) in der Achsenrichtung von dem Muffenmanschettenbereich (210) weg erstrecken, wobei der Zapfenmanschettenbereich (211) und der Muffenmanschettenbereich (210) im Wesentlichen konzentrisch angeordnet sind und in der Achsenrichtung wenigstens teilweise übereinstimmen, wenn die Verbindung in der vollständigen Aufbauposition in einem Gewindeeingriff steht, wobei die Gewinde (207a, 207b, 206a und 206b) des Zapfens und der Muffe an beiden axialen Seiten des Muffen- und des Zapfenmanschettenbereichs (210, 211) in Eingriff stehen,
eine ringförmige Manschettendichtung (205) zur radial konzentrischen Anordnung zwischen dem Zapfenmanschettenbereich (211) und dem Muffenmanschettenbereich (210), wobei sich die ringförmige Manschettendichtung (205) an einer Stelle befindet, an der die Manschettendichtung radial zwischen dem Zapfenmanschettenbereich (211) und dem Muffenmanschettenbereich (210) zusammenpressbar ist, wenn die Verbindung in der vollständigen Aufbauposition in einem Gewindeeingriff steht, **dadurch gekennzeichnet, dass**
die Manschettendichtung (205) eine Manschettendichtung aus Metall ist, die aus einem Metall aufgebaut ist, das einen niedrigeren Elastizitätsmodul als jenen des Materials aufweist, das das Zapfenelement (207) oder das Muffenelement (206) bildet, wobei die Manschettendichtung (205) einen Druckdichtungseingriff zwischen dem Zapfenelement (207) und dem Muffenelement (206) bildet, während sie hohen Druckunterschieden, die über die Manschettendichtung wirken, ausgesetzt ist.

2. Gewindeverbindung nach Anspruch 1, wobei die Manschettendichtung (205) durch das Zapfenelement (207) getragen wird, bevor die Verbindung in der vollständigen Aufbauposition in Eingriff steht.

3. Gewindeverbindung nach Anspruch 1, wobei die Manschettendichtung (205) an ihrer inneren und/oder äußeren Umfangsfläche wenigstens eine kegelstumpfförmige Fläche (208, 209) aufweist.

4. Gewindeverbindung nach Anspruch 1, wobei die Manschettendichtung (205) in der Achsenrichtung zusammengepresst ist, wenn die Verbindung in der vollständigen Aufbauposition in einem Gewindeeingriff steht.

5. Gewindeverbindung nach Anspruch 1, wobei der Zapfen- und der Muffenmanschettenbereich (211, 210) in der Achsenrichtung an oder in unmittelbarer Nähe der größten Querschnittfläche, die durch das Zapfen- und das Muffenelement (207, 206) gebildet wird, wenn die Verbindung in der vollständigen Aufbauposition in einem Gewindeeingriff steht, angeordnet sind.

6. Gewindeverbindung nach Anspruch 1, wobei die Zapfengewinde (207a und 207b) eine Schulter umfassen, die in der Achsenrichtung zwischen den Stufengewinden angeordnet ist.

7. Gewindeverbindung nach Anspruch 1, wobei die Manschettendichtung (205a) zwei im Wesentlichen gleichartige Enddurchmesser und einen Bogenabschnitt, dessen Durchmesser zu einer Mitte der Manschettendichtung zunimmt, zwischen den beiden Enddurchmessern aufweist.

8. Gewindeverbindung nach Anspruch 1, wobei die Manschettendichtung (205b) eine linsenförmige Querschnittgestaltung aufweist.

9. Gewindeverbindung nach Anspruch 1, wobei die Manschettendichtung (205c) einen länglichen ovalen Querschnitt aufweist.

10. Gewindeverbindung nach Anspruch 1, wobei die Manschettendichtung (205d) eine glatte äußere Umfangsfläche und eine mit halbkreisförmigen ringförmigen Nuten versehene innere Umfangsfläche aufweist.

11. Gewindeverbindung nach Anspruch 1, wobei die Manschettendichtung (205e) eine innere und eine äußere Umfangsfläche aufweist, und wobei sowohl die innere als auch die äußere Umfangsfläche mit ringförmigen Nuten mit flachem Grund versehen ist.

12. Gewindeverbindung nach Anspruch 1, wobei die Manschettendichtung (205f) eine innere und eine äußere Umfangsfläche aufweist, die mit ringförmigen Nuten versehen sind, welche in der Achsenrichtung in Bezug zueinander versetzt sind.

## Revendications

1. Accouplement fileté, comprenant :
un élément mâle (207) comprenant des filets externes (207a et 207b) formés le long d'une surface externe dudit élément mâle (207),
un élément femelle (206) comprenant des filets internes (206a et 206b) formés le long d'une surface interne dudit élément femelle (206), lesdits éléments mâle et femelle (207, 206) étant adaptés pour rentrer en prise conjointement avec lesdits filets mâles et femelles (207a et 207b, 206a et 206b) par vissage en position complètement montée afin de former un accouplement fileté,
une zone annulaire de manchon femelle (211) placée en une position axialement intermédiaire par rapport aux extrémités axiales desdits filets mâles (207a et 207b), moyennant quoi lesdits filets mâles (207a et 207b) s'étendent dans le sens axial depuis ladite zone de manchon mâle (211) d'un côté axial et de l'autre de ladite zone de manchon mâle, lesdits filets mâles (207a et 207b) comprennent des filets trapézoïdaux ayant différents diamètres d'un côté axial et de l'autre de ladite zone de manchon mâle (211), ladite zone de manchon mâle (211) comprenant une zone dénuée de filets,
au moins une zone annulaire de manchon femelle (210) placée en une position axialement intermédiaire par rapport aux extrémités axiales desdits filets femelles (206a et 206b), moyennant quoi lesdits filets femelles (207a et 207b) s'étendent dans le sens axial depuis ladite zone de manchon femelle (210) d'un côté axial et de l'autre de ladite zone de manchon femelle (210), ladite zone de manchon mâle (211) et ladite zone de manchon femelle (210) étant disposées essentiellement concentriquement et au moins en coïncidence partiellement axiale quand ledit accouplement est engagé par vissage en ladite position complètement montée, où lesdits filets mâles et femelles (207a et 207b, 206a et 206b) de chaque côté axial desdites zones de manchon femelle et mâle (210, 211) sont en prise,
un raccord à manchon annulaire (205) pour le placement concentrique dans le sens radial entre ladite zone de manchon mâle (211) et ladite zone de manchon femelle (210), ledit raccord à manchon annulaire (205) étant situé à un endroit où le raccord à manchon est adapté à supporter une compression radiale entre ladite zone de manchon mâle (211) et ladite zone de manchon femelle (210) quand ledit accouplement est engagé par vissage en ladite position complètement montée, **caractérisé en ce que**
ledit raccord à manchon (205) est un raccord à manchon métallique constitué d'un métal ayant un module d'élasticité inférieur à celui du matériau formant l'élément mâle (207) ou l'élément femelle (206), moyennant quoi le raccord à manchon (205) constitue un engagement étanche à la pression entre l'élément mâle (207) et l'élément femelle (206) quand ils sont exposés à des différentiels de pression élevés agissant sur ledit raccord à manchon.

2. Accouplement fileté selon la revendication 1, dans lequel ledit raccord à manchon (205) est supporté par ledit élément mâle (207) avant que ledit accouplement ne soit engagé en ladite position complètement montée.

3. Accouplement fileté selon la revendication 1, dans lequel ledit raccord à manchon (205) comprend au moins une surface tronconique (208, 209) sur ses faces périphériques internes et/ou externes.

4. Accouplement fileté selon la revendication 1, dans lequel ledit raccord à manchon (205) est comprimé axialement quand ledit accouplement est engagé par vissage en ladite position complètement montée.

5. Accouplement fileté selon la revendication 1, dans lequel lesdites zones de manchon mâle et femelle (211, 210) sont placées dans le sens axial au niveau, ou dans le proche voisinage, de la section transversale la plus grande formée par les éléments mâle et femelle (207, 206) quand ledit accouplement est engagé par vissage en ladite position complètement montée.

6. Accouplement fileté selon la revendication 1, dans lequel lesdits filets mâles (207a et 207b) comprennent un épaulement placé dans le sens axial entre lesdits filets trapézoïdaux.

7. Accouplement fileté selon la revendication 1, dans lequel ledit raccord à manchon (205a) possède deux diamètres terminaux sensiblement similaires et une section en arc dont le diamètre augmente en direction d'un centre dudit raccord à manchon entre lesdits deux diamètres terminaux.

8. Accouplement fileté selon la revendication 1, dans lequel ledit raccord à manchon (205b) a une configuration de section transversale en forme de lentille.

9. Accouplement fileté selon la revendication 1, dans lequel ledit raccord à manchon (205c) possède une section transversale ovale allongée.

10. Accouplement fileté selon la revendication 1, dans lequel ledit raccord à manchon (205d) possède une face périphérique externe lisse et une face interne munie de rainures annulaires semi-circulaires.

11. Accouplement fileté selon la revendication 1, dans lequel ledit raccord à manchon (205e) possède des faces périphériques internes et externes et dans lequel lesdites deux faces périphériques internes et externes sont munies de rainures annulaires à fond plat.

12. Accouplement fileté selon la revendication 1, dans lequel ledit raccord à manchon (205f) possède des faces périphériques internes et externes munies de rainures annulaires qui sont décalées les unes par rapport aux autres dans le sens axial.
